# DEMANDE DE BREVET EUROPEEN

(11) **EP 1 609 593 A2**
(43) Date de publication de la demande: **28.12.2005**
(21) Numéro de dépôt: 05076517.1
(22) Date de dépôt: 28.06.1995
(51) Int. Cl.: B32B 27/08, B32B 7/12, C09J 151/06, B65D 65/40

(54) **Matériaux d'emballage comprenant une couche d'oxyde de silicium et une couche de polyoléfine**

(30) Priorité: 30.06.1994 FR 9408090
(62) Demande divisionnaire de: 95924377.5
(71) Demandeur: Arkema, 92800 Puteaux (FR)
(72) Inventeur: Breant, Patrice, 27470 Serquigny (FR); Tordjeman, Philippe, 34980 Saint-Gely-Du-Fesc (FR)

(57) **Abrégé**

L'invention concerne un matériau comprenant un film recouvert d'oxyde de silicium et un film de polyoléfine, tel que le liant disposé entre l'oxyde de silicium et le film de polyoléfine est choisi parmi :
- les polyoléfines greffées avec des alcoxysilanes insaturés ;
ou
- les polyoléfines greffées avec des epoxydes insaturés.
ou
- les copolymères de l'éthylène et d'au moins un epoxyde insaturé.

Ce matériau est particulièrement utile pour fabriquer des emballages alimentaires.

## Description

La présente invention concerne un matériau d'emballage comprenant une couche d'oxyde de silicium et une couche de polyoléfine.

Elle concerne plus particulièrement une structure comprenant un film recouvert d'oxyde de silicium et un film de polyoléfine, un liant d'adhésion étant disposé entre l'oxyde de silicium et le film de polyoléfine. On peut, par exemple, du côté du film de polyoléfine coller à chaud ce matériau sur du carton, puis recouvrir chaque face de l'ensemble obtenu avec une feuille de polyéthylène.

Ces matériaux sont utiles pour fabriquer des emballages de liquides alimentaires en forme de briques.

JP 03099842 (KOKAI) publié le 25 Avril 1991 décrit des films d'EVOH/Vinyl silane recouverts d'oxyde de silicium sur lesquels on colle une feuille de polypropylène à l'aide d'un adhésif uréthane.

JP 05330568 (KOKAI) publié le 14 Décembre 1993 décrit des films de polyester recouverts de silice sur lesquels on colle une feuille de résine éthylénique à l'aide d'un adhésif qui est un copolymère éthylène-anhydride maléique- acrylate d'éthyle.

On a maintenant trouvé qu'on pouvait obtenir des matériaux undélaminables en utilisant des liants à base de polyoléfines greffées silanes ou epoxydes.

La présente invention est un matériau comprenant un film recouvert d'oxyde de silicium et un film de polyoléfine, tel que le liant disposé entre l'oxyde de silicium et le film de polyoléfine est choisi parmi :
- les polyoléfines greffées avec des alcoxysilanes insaturés,
   ou
- les polyoléfines greffées avec des epoxydes insaturés.
   ou
- les copolymères de l'éthylène et d'au moins un epoxyde insaturé.

Le film recouvert d'oxyde de silicium est connu de l'art antérieur. C'est par exemple un film de polyester tel que le polyéthylène téréphtalate (PET) ou le polybutylène téréphtalate (PBT) ou de polyamide (PA).

Le film de polyoléfine est en polyéthylène, polypropylène ou des copolymères de l'éthylène tels que par exemple des copolymères éthylène-propylène, éthylène butène, éthylène hexène, éthylène -(méth)acrylate d'alkyle ou éthylène-acétate de vinyle.

S'agissant du liant, les polyoléfines qu'on greffe avec des alcoxysilanes peuvent être choisies parmi :
- les homopolymères de l'éthylène, ou du propylène ;
- les copolymères de l'éthylène et de l'acétate de vinyle ;
- les copolymères de l'éthylène et d'au moins un (méth)acrylate d'alkyle. Le groupement alkyle du (méth)acrylate d'alkyle a jusqu'à 10 atomes de carbone et peut être linéaire, ramifié ou cyclique. A titre d'illustration du (méth)acrylate d'alkyle, on peut citer notamment l'acrylate de n-butyle, l'acrylate de méthyle, l'acrylate d'isobutyle, l'acrylate d'éthyl-2 hexyle, l'acrylate de cyclohexyle, le méthacrylate de méthyle, le méthacrylate d'éthyle. Parmi ces (méth)acrylates, on préfère l'acrylate d'éthyle, l'acrylate de méthyle, l'acrylate de n-butyle et le méthacrylate de méthyle.
- les copolymères de l'éthylène et d'une alphaoléfine telle que le butène ou l'héxène.
- les polyalphaoléfines amorphes (APAO). De préférence, on utilise les APAO dérivées de l'éthylène, du propylène, du butène ou de l'héxène. On utilise avantageusement soit des copolymères éthylène propylène butène à haute teneur en butène, soit des copolymères éthylène propylène butène à haute teneur en propylène soit des homo ou copolymères du butène.

On utilise avantageusement des copolymères éthylène / (méth)acrylate d'alkyle.

Parmi les alcoxysilanes portant une insaturation, on peut citer :

CH₂ = CH ― Si(OR)₃ les vinyltrialcoxysilanes

CH₂ = CH ― CH₂ ― Si(OR)₃ les allyltrialcoxysilanes

CH₂ = CR₁ ― CO ― O ― Y ― Si (OR)₃

les (méth)acryloxyalkyltrialcoxysilanes (ou (méth)acrylsilanes) dans lesquels :
R est un alkyl ayant de 1 à 5 atomes de carbone ou un alcoxyle ― R₂OR₃ dans lequel R₂ et R₃ sont des alkyles ayant au plus 5 atomes de carbone pour l'ensemble R₂ et R₃.
R₁ est un hydrogène ou un méthyle.
Y est un alkylène ayant de 1 à 5 atomes de carbone.

On utilise par exemple des vinylsilanes tels que le triméthoxyvinylsilane, triéthloxyvinylsilane, tripropoxyvinylsilane, tributoxyvinylsilane, tripentoxyvinylsilane, tris(β-méthoxyéthoxy)-vinylsilane, des allylsilanes tels que le triméthoxyallylsilane, triéthoxyallylsilane, tripropoxyallylsilane, tributoxyallylsilane, tripentoxyallylsilane, des acrylsilanes tels que l'acryloxyméthyltriméthoxysilane, méthacryloxyméthylméthoxysilane, acryloxyéthyltriméthoxysilane, méthacryloxyméthylméthoxysilane, acryloxyéthyltriméthoxysilane, méthacryloxyéthyltriméthoxysilane, acryloxypropyltriméthoxysilane, méthacryloxypropyltriméthoxysilane, acryloxybutyltriméthoxysilane, méthacryloxybutylméthoxysilane, acryloxyéthyltriéthoxysilane, méthacryloxyéthyltriéthoxysilane, méthacryloxyéthyltripropoxysilane, acryloxypropyltributoxysilane, ou le méthacryloxypropyltripentoxysilane.

On peut aussi utiliser des mélanges de ces produits.

On utilise de préférence :

CH₂ = CH ― Si ―(OCH₃)₃ vinyltriméthoxysilane (VTMO)

CH₂ = CH ― Si ―(OCH₂CH₃)₃ vinyltriéthoxysilane (VTEO)

CH₂ = CH ― Si ―(OCH₂OCH₂CH₃)₃ vinyltriméthoxyéthoxysilane (VTMOEO)

et le (3-(méthacryloxy)propyl)triméthoxysilane.

CH₂ = C(CH₃)―CO―O―(CH₂)₃―Si(OCH₃)₃

On peut procéder au greffage à l'état fondu des polyoléfines en présence d'initiateur(s) radicalaire(s).

La réaction de greffage est mise en oeuvre dans une extrudeuse mono ou double vis alimentée par des polyoléfines dans une trémie d'alimentation, par exemple sous forme de granulés ; dans une première zone de l'extrudeuse, on procède à la fusion des polyoléfines par chauffage et dans une seconde zone, on introduit les réactifs au sein de la masse fondue des polyoléfines.

Les initiateurs radicalaires peuvent être choisis parmi les péroxydes, péracides, péresters, péracétals. On les utilise en général à raison de 0,01 % à 0,5 % en masse par rapport aux polyoléfines à greffer.

A titre d'exemple, on peut citer :
- le peroxyde de dicumyle (DICUP),
- le 2,5-diméthyl 2,5-ditertiobutylperoxyhexane (DHBP)
- l'α,α' (ditertiobutylperoxyisopropyl) benzène (Y1490).

On préfère dissoudre l'initiateur radicalaire dans le vinylalcoxysilane liquide avant de les introduire, par exemple au moyen d'une pompe doseuse, dans les polyoléfines à l'état fondu.

On préfère que la zone d'introduction des réactifs soit suffisamment longue et à une température suffisamment basse pour assurer une bonne dispersion des réactifs et une décomposition thermique de l'initiateur radicalaire la plus faible possible.

La réaction de greffage proprement dite a lieu dans une troisième zone de l'extrudeuse à une température apte à assurer la décomposition totale de l'initiateur radicalaire ; avant la sortie de la masse fondue en tête d'extrudeuse, une zone de dégazage est prévue où les produits de décomposition de l'initiateur et le vinylsilane qui n'a pas réagi sont dégazés par exemple sous vide.

On récupère les polyoléfines greffées en sortie d'extrudeuse par exemple sous forme de joncs granulés après refroidissement sous air froid.

Le rapport pondéral des greffons au polymère greffé est en général compris entre 0,1 et 5 % et de préférence 0,15 à 2,5 %.

Les polyoléfines qu'on greffe avec des epoxydes insaturés peuvent être choisies dans le même groupe que celles qu'on greffe avec des alcoxysilanes insaturés. On utilise avantageusement les copolymères éthylène / (méth)acrylate d'alkyle.

A titre d'exemple d'epoxydes insaturés, on peut citer notamment les esters et les éthers de glycidyle, l'itaconate de glycidyle, le vinylglycidyléther, l'allylglycidyléther, le vinylcyclohéxènemonoxide.

On peut citer aussi les esters et les éthers de glycidyle alicycliques tels que le 2-cyclohexène-1-glycidyléther, le cyclohéxène-4,5-diglycidylcarboxylate, le cyclohégène-4-glycidyl carboxylate, le 5-norbornène-2-méthyl-2-glycidyl carboxylate et l'endocis-bicyclo (2,2,1)-5-heptène-2,3 diglycidyl dicarboxylate.

Parmi ces epoxydes insaturés, on préfère tout particulièrement l'acrylate et le méthacrylate de glycidyle.

Pour greffer les epoxydes insaturés sur les polyoléfines, on peut utiliser le même procédé que pour greffer les alcoxysilanes insaturés.

S'agissant du troisième type de liant, à savoir les copolymères de l'éthylène et d'au moins un epoxyde insaturé, on peut choisir l'epoxyde parmi la même famille que ceux déjà cités pour les liants qui sont des polyoléfines greffées avec des epoxydes insaturés. Ce copolymère de l'éthylène et d'au moins un epoxyde insaturé peut aussi comprendre un (méth)acrylate d'alkyle ou de l'acétate de vinyle. Le (méth) acrylate d'alkyle peut être choisi dans la même famille que citée plus haut pour les comonomères éventuels des polyoléfines greffées avec des alcoxysilanes insaturés. A titre d'exemple de copolymères de l'éthylène et d'au moins un epoxyde insaturé, on peut citer les copolymères de l'éthylène, d'un (méth)acrylate d'alkyle et de méthacrylate de glycidyle contenant en poids 2 à 10 % de préférence 6 à 8 % de méthacrylate de glycidyle et au moins 50 % d'éthylène.

### Exemple 1

On a préparé deux bobines de film PET revêtu d'oxyde de silicium qu'on appelle bobine 1 et bobine 2, la couche d'oxyde de silicium déposée en plasma fait 200 ängstroms et le PET 12 microns.

On a préparé différents liants qu'on a soit coextrudé, soit thermoscellé sur les films des bobines 1 et 2.

### Composition des liants :

a copolymère éthylène-acrylate de méthyle à 29 % d'acrylate de méthyle et d'indice de fluidité sous une charge de 2,16 kg à 190° C = 3 dg/mn.
b copolymère éthylène-acrylate de butyle-anhydride maléique à 3 % d'anhydride maléique à 15 % d'acrylate d'indice de fluidité 5 dg/mn.
c copolymère éthylène-acrylate de méthyle identique à a greffé à 0,45 % en poids par du vinyltriméthoxysilane.

On a mesuré la force de pelage des complexes liant / film PET revêtu oxyde de silicium.

Les résultats sont rassemblés dans le tableau 1 suivant :

**Tableau 1**

| **Force de pelage à 180° C** | | | | | |
|---|---|---|---|---|---|
| | **en N/20 mm** | **en N/25 mm** | | **en N/25 mm** | |
| **Liants** | **Complexes coextrudés ep du liant : 10 µm...** | **Complexes thermoscellés ep du liant : 350 µm** | | **Complexes thermoscellés ep du liant : 20 µm** | |
| | Bobine ..... | Bobine 1 | Bobine 2 | Bobine 1 | Bobine 2 |
| a éthylène/ acrylate | - | < 0,5 | 1 | < 0,1 | < 0,3 |
| b éthylène /acrylate/anhyd maléique | 1,4 | 3 | - | 1 à 2 | 1 à 2 |
| c éthylène/acryla te greffé silane | - | 5 | 18 * | 5 | 7 * |

| | | | | | |
|---|---|---|---|---|---|
| * rupture du film PET. | | | | | |

### Exemple 2

On a préparé des liants éthylène/acrylate de méthyle de même composition que le liant a avec différents taux de greffage de vinyltriméthoxysilane. Le taux de greffage est en poids de greffon par rapport au polymère greffé.

Le complexe liant / film de PET revêtu d'oxyde de silicium a été préparé par thermoscellage.

L'épaisseur du film de liant est de 350 µm.

On a mesuré la force de pelage, les résultats figurent sur le tableau 2.

**Tableau 2**

| | | | | | | | |
|---|---|---|---|---|---|---|---|
| Taux de silane greffés | 0 | 0,06 | 0,1 | 0,2 | 0,25 | 0,3 | 0,45 |
| Force de pelage en N/25 mm à 180° C | < 0,5 | 0,5 | 1,8 | 3,5 | 3,3 | 4,5 | 5 |

## Revendications

1. Matériau comprenant un film recouvert d'oxyde de silicium et un film de polyoléfine, tel que le liant disposé entre l'oxyde de silicium et le film de polyoléfine est choisi parmi :
- les polyoléfines greffées avec des alcoxysilanes insaturés ;
ou
- les polyoléfines greffées avec des epoxydes insaturés.
ou
- les copolymères de l'éthylène et d'au moins un epoxyde insaturé.

2. Matériau selon la revendication 1 **caractérisé en ce que** le liant est un copolymère éthylène/(méth)acrylate d'alkyle greffé par des vinyltrialcoxysilanes, des allyltrialcoxysilanes ou des (méth)acryloxyalkyltrialcoxysilanes.

3. Matériau selon la revendication 1 ou 2 **caractérisé en ce que** le film recouvert d'oxyde de silicium est en polyéthylène téréphtalate et le film de polyoléfine est en polyéthylène.

4. Matériau selon l'une des revendications 1 à 3 **caractérisé en ce que** le liant est un copolymère éthylène-(méth)acrylate d'alkyle greffé par le (méth)acrylate de glycidyle.

5. Matériau selon l'une des revendications 1 à 3 **caractérisé en ce que** le liant est un copolymère éthylène-(méth)acrylate d'alkyle - (méth)acrylate de glycidyle.
